# EUROPÄISCHE PATENTANMELDUNG

(11) **EP 1 808 507 A1**
(43) Veröffentlichungstag der Anmeldung: **18.07.2007**
(21) Anmeldenummer: 06000859.6
(22) Anmeldetag: 16.01.2006
(51) Int. Cl.: C23C 4/02, C23C 28/00, F01D 5/28, F01D 11/12

(54) **Bauteil mit Beschichtung und Verfahren zum Herstellen einer Beschichtung**

(71) Anmelder: SIEMENS AKTIENGESELLSCHAFT, 80333 München (DE)
(72) Erfinder: Kaiser, Axel, Dr., 41462 Neuss (DE); Malow, Thomas, Dr., 45470 Mülheim an der Ruhr (DE)

(57) **Zusammenfassung**

Ein erfindungsgemäßes Bauteil (1) umfasst ein Substrat (2) und eine über dem Substrat (2) aufgebrachte Beschichtung (3). Es zeichnet sich dadurch aus, dass in der Beschichtung (3) Dehnfugen (5) vorhanden sind, die gekrümmt verlaufen und zumindest einen Oberflächenbereich (7) umschließen.

## Beschreibung

Die vorliegende Erfindung betrifft ein Bauteil mit einer Beschichtung gemäß Anspruch 1 sowie ein Verfahren zum Herstellen einer Beschichtung auf einer Bauteiloberfläche gemäß Anspruch 12.

Bauteile mit Beschichtungen, wie z. B. mit Wärmedämmbeschichtungen, kommen beispielsweise in Turbinen, etwa in Gasturbinen zur Stromerzeugung, vor. Turbinenschaufeln oder die Nabe einer Turbine sind in der Regel mit einer thermischen Barrierenschicht (TBC = Thermal Barrier Coating) versehen, um metallische Grundkörper gegen den thermischen Einfluss des heißen Gases in der Turbine zu schützen. Bei Verwendung keramischer Beschichtungen als Wärmedämmbeschichtungen kommt darüber hinaus in der Regel noch eine Haftvermittlerschicht zur Anwendung, die auf ein metallisches Grundmaterial des Bauteils aufgebracht wird, bevor die Beschichtung mit dem keramischen Beschichtungsmaterial erfolgt.

Beim Betrieb von Turbinenbauteilen mit Wärmedämmbeschichtungen kann es zu Abplatzungen und Aufwölbungen der Beschichtung kommen. Eine Ursache hierfür liegt darin, dass die keramische Beschichtung in der Regel einen wesentlich niedrigeren thermischen Ausdehnungskoeffizienten als der metallische Grundkörper des Bauteils aufweist. Wiederholte Zyklen des Aufwärmens und Abkühlens können daher zu Spannungen führen, welche die Aufwölbungen und Abplatzungen verursachen können.

Eine weitere Ursache für Aufwölbungen und Abplatzungen ist die Tatsache, dass manche Keramikbeschichtungen bei hohen Temperaturen für Sauerstoff durchlässig sind, so dass oxidierbare Anteile der Haftvermittlerschicht oxidiert werden können. Wenn die Oxidation mit einer Volumenvergrößerung verbunden ist, kann dies die Abplatzung oder Aufwölbung der Beschichtung verursachen.

Um Abplatzungen und Aufwölbungen einer Beschichtung auf einem Grundkörper zu verhindern, ist in EP 0 935 009 B1 vorgeschlagen, die Oberfläche des Grundkörpers mit einer Skelettstruktur in Form eines Netzes oder eines Gitters zu versehen, und die Beschichtung auf die mit der Skelettstruktur versehene Oberfläche aufzubringen. Dadurch entstehen beim Aufbringen der Beschichtung Hohlräume in der Beschichtung, die für eine Dehnungstoleranz der Beschichtung sorgen.

In DE 42 38 369 A1 ist ein Bauteil aus einem metallischen Grundsubstrat mit einer keramischen Beschichtung beschrieben, bei dem die Oberfläche des Grundsubstrats mit einer Vielzahl von senkrecht vorstehenden Stegen versehen ist. Die Höhe, mit der die Stege über die Oberfläche vorstehen, ist dabei geringer als Dicke der Beschichtung. Während des Aufbringens der Beschichtung bilden sich im Bereich oberhalb der Stege Segmentierungsrisse aus, die sich bis in die Beschichtungsoberfläche fortsetzen. Diese Segmentierungsrisse verbreitern sich bei Betriebstemperatur und schließen sich bei Raumtemperatur, wodurch eine erhöhte Dehnungstoleranz der Beschichtung erzielt wird.

In EP 0 192 162 B1 ist vorgeschlagen, einen metallischen Grundkörper mit einer metallischen Verankerungsmatrix zu versehen, um die Haftung einer Keramikschicht am Grundkörper zu erhöhen. Die Verankerungsmatrix kann beispielsweise aus wabenförmigen Strukturen, nadelförmigen Strukturen oder stiftförmigen Strukturen aufgebaut sein.

In der US 2004/0081760 A1 sind gekrümmt verlaufene Dehnfugen offenbart.

Gegenüber diesem Stand der Technik ist es eine Aufgabe der vorliegenden Erfindung, ein vorteilhaftes Bauteil mit einer Wärmedämmbeschichtung sowie ein vorteilhaftes Verfahren zum Herstellen einer Wärmedämmbeschichtung auf einer Bauteiloberfläche zur Verfügung zu stellen.

Die erste Aufgabe wird durch ein Bauteil nach Anspruch 1, die zweite Aufgabe durch ein Verfahren nach Anspruch 12 gelöst. Die abhängigen Ansprüche enthalten vorteilhafte Weiterbildungen der Erfindung, die in vorteilhafter Art und Weise beliebig miteinander verknüpft werden können.

Ein erfindungsgemäßes Bauteil aus einem Substrat, insbesondere aus einem metallischen Substrat, mit einer über dem Substrat aufgebrachten Beschichtung zeichnet sich dadurch aus, dass in der Beschichtung Dehnfugen vorhanden sind, die zumindest stellenweise gekrümmt sind und zumindest einen Oberflächenbereich zumindest teilweise umschließen.

Mittels der Dehnfugen lässt sich die Dehntoleranz der Beschichtung erhöhen. Insbesondere bei großflächigen Bauteilen, beispielsweise Nabenbauteilen von Gasturbinen, lassen sich so Abplatzungen und Aufwölbungen einer Wärmedämmbeschichtung vermeiden. Anders als im Stand der Technik werden beim erfindungsgemäßen Bauteil Aufwölbungen und Abplatzungen vermieden, ohne dass sich metallische Elemente aus dem Stand der Technik von der Bauteiloberfläche aus in die Wärmedämmbeschichtung hinein erstrecken. Metallische Elemente weisen eine gute thermische Leitfähigkeit auf, wodurch sich die Wärmedämmeigenschaften der Wärmedämmschicht gegenüber Wärmedämmschichten ohne metallische Elemente verschlechtern.

In einer Ausgestaltung des erfindungsgemäßen Bauteils sind die Dehnfugen netzartig ausgebildet. Durch gezielte Auswahl der Form des Netzes bzw. der Geometrie der durch die Dehnfugen erzeugten Oberflächenbereiche lassen sich die Dehnungseigenschaften der Beschichtung gezielt an die Geometrie des Bauteils anpassen.

Um die Dehnungstoleranz der Beschichtung weiter zu erhöhen, kann sie eine Porosität aufweisen.

Insbesondere kann die Beschichtung als keramische Beschichtung zur Wärmedämmung ausgestaltet sein. Wenn zudem das Substrat ein metallisches Substrat ist, ist es vorteilhaft, wenn zwischen dem Substrat und der keramischen Wärmedämmbeschichtung eine Haftvermittlerschicht vorhanden ist. Mittels der Haftvermittlerschicht lässt sich ein sicheres Haften der keramischen Wärmedämmbeschichtung auf dem metallischen Substrat erzielen.

Das erfindungsgemäße Bauteil kann insbesondere als Turbinenbauteil, beispielsweise als Nabenbauteil einer Turbine, ausgestaltet sein.

Im erfindungsgemäßen Verfahren zum Herstellen einer Beschichtung auf einer Bauteiloberfläche wird vor dem Aufbringen der Beschichtung eine Struktur aus draht- oder seilförmigen Elementen mit Abstand über der Bauteiloberfläche angeordnet. Nach dem Aufbringen der Beschichtung wird die Struktur dann wieder entfernt. Beim Beschichten wird die Beschichtung in den durch die Struktur abgedeckten Bereichen weniger stark auftragen als in den nicht abgedeckten Bereichen. Im Ergebnis entstehen die Dehnfugen der Beschichtung.

Das Aufbringen der beispielhaft erwähnten Wärmedämmbeschichtung kann insbesondere mittels eines thermischen Spritzverfahrens, beispielsweise atmosphärischen Plasmaspritzens (APS) oder Hochgeschwindigkeitsflammspritzens (HVOF, high velocity oxygen fuel) oder eines Abscheideprozesses aus der Gasphase, beispielsweise eines so genannten EB-PVD-Verfahrens (electron beam physical vapor deposition) sowie durch Kaltgasspritzen erfolgen. In einem EB-PVD-Verfahren wird das Beschichtungsmaterial mittels eines Elektronenstrahls von einem Vorrat abgedampft, wobei die Bedingungen in der Umgebung des Bauteils beim Beschichten so eingestellt sind, dass sich das abgedampfte Material aus der Gasphase auf die zu beschichtenden Oberfläche anlagert.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.

Die Figuren 1 bis 6 zeigen Ausführungsbeispiele für ein erfindungsgemäßes Bauteil mit Wärmedämmbeschichtung in Draufsicht.

Figur 7 zeigt einen vergrößerten Ausschnitt des Bauteils aus Figur 1 in einem Querschnitt entlang der Linie VII - VII.

Figur 8 zeigt einen Schritt des erfindungsgemäßen Herstellungsverfahrens für ein erfindungsgemäßes Bauteil mit Wärmedämmbeschichtung.

Figur 9 zeigt eine perspektivische Ansicht einer Turbinenschaufel.

Figur 10 zeigt eine perspektivische Ansicht einer Brennkammer.

Figur 11 zeigt eine perspektivische Ansicht einer Gasturbine.

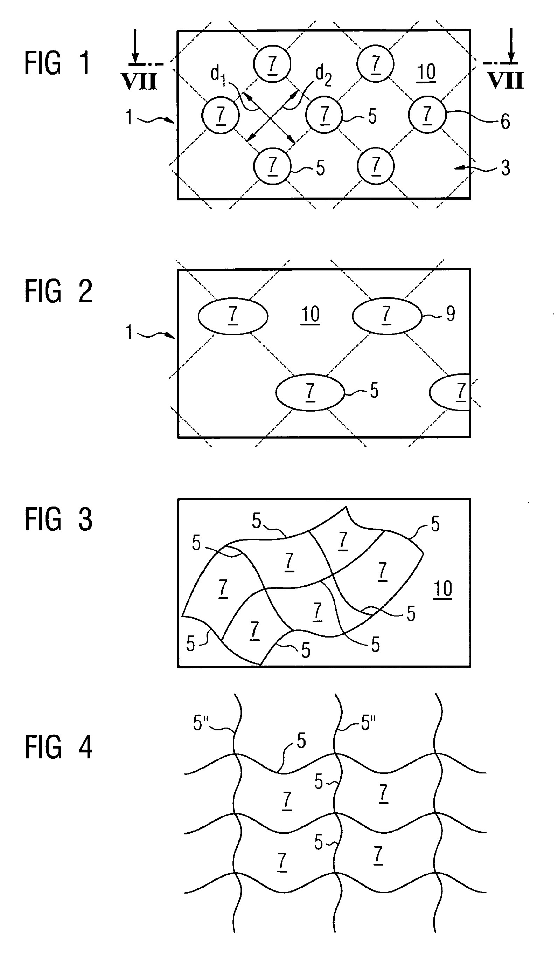

In den Figuren 1 bis 6 sind erfindungsgemäße Bauteile 1, insbesondere ein großflächiges Turbinenbauteil 1 mit einer Beschichtung 3 dargestellt, das eine Oberfläche 10 aufweist. Die Erfindung wird am Beispiel einer keramischen Wärmedämmbeschichtung (= Wärmedämmbeschichtung 3) für eine Beschichtung 3 näher erläutert.

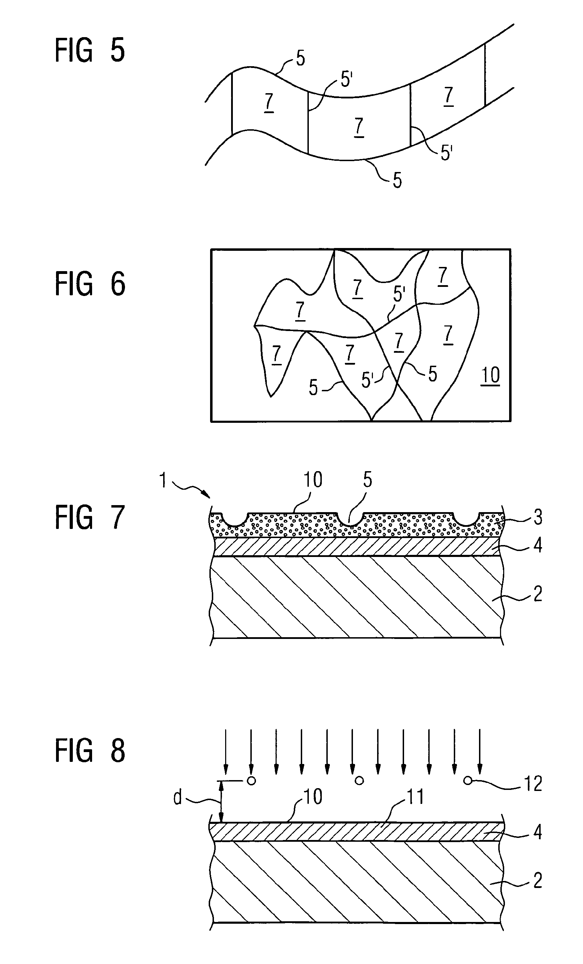

Das Turbinenbauteil 1 weist einen metallischen Grundkörper 2 auf, auf dem vorzugsweise eine Haftvermittlerschicht 4 (Fig. 7) aufgebracht ist. Die Haftvermittlerschicht 4 dient dabei dazu, die Haftung der Wärmedämmbeschichtung 3 am metallischen Grundkörper 2 zu erhöhen.

Die Wärmedämmbeschichtung 3 ist auf das Turbinenbauteil 1 flächig aufgebracht und weist gekrümmt verlaufende Dehnfugen 5 auf, die zumindest einen Oberflächenbereich 7 vollständig umschließen.
Der Oberflächenbereich 7 auf der Oberfläche 10, der von den gekrümmt verlaufenden Dehnfugen 5 vollständig umschlossen wird, kann beispielsweise eine Kreisform 6 aufweisen (Fig. 1) oder auch oval 9 (Fig. 2) ausgebildet sein.
Andere Oberflächenbereiche 7 aus irregulär geformten Flächen mit gekrümmt verlaufenden Dehnfugen 5 als Umfangslinien einer solchen Fläche sind ebenfalls denkbar.

Es muss aber nicht die gesamte Oberfläche 10 eines Bauteils 1 Dehnfugen 5 aufweisen. Vorzugsweise ist nur ein Teil der Oberfläche eines Bauteils 1 mit Dehnfugen 5 versehen.

Die Kreise 6 oder die Ovale 9 können auf der Oberfläche 10 gleichmäßig verteilt, d.h. auf Linien eines gedachten Gitters 10, wie es in Figur 1, 2 mit gestrichelten Linien angedeutet ist, sein.

Das Gitter 10 besteht vorzugsweise aus geradlinig verlaufenden Linien, die sich insbesondere unter einem Winkel von 90° kreuzen. Dabei bildet sich eine gedachte Fläche in Form eines Rechtecks mit den Seitenlängen d₁ und d₂. Diese von dem Gitter eingeschlossenen Flächen können quadratisch sein (d₁ = d₂) oder rechteckig ausgebildet sein (d₁ ≠ d₂). Das gedachte Gitter 10 kann auch andere Formen aufweisen.
Die Kreise 6 bzw. Ovale 9 sind dann mittig auf den Knotenpunkten des Gitters 10 angeordnet.

Die Durchmesser der Kreise 6 sind vorzugsweise gleich groß, können aber auch lokal variiert werden.
Ebenso können die Radien der Ovale 9 gleich oder lokal unterschiedlich ausgebildet sein.

Figur 3 zeigt netzartig ausgebildete Oberflächenbereiche 7, die hier vollständig durch Kreuzung von gekrümmt verlaufenden Dehnfugen 5 gebildet werden.

Die Oberfläche 10 der Wärmedämmbeschichtung 3 wird durch die netzartig angeordneten Dehnfugen 5 in eine Anzahl von Oberflächenbereichen 7 unterteilt.

Die Dehnfugen 5 bilden vorzugsweise nur geschlossene Oberflächenbereiche 7.

Darüber hinaus können die gekrümmt verlaufenden Dehnfugen 5 nicht nur geschlossene Oberflächenbereiche 7 umschließen, sondern auch zum Teil so ausgebildet sein, dass gekrümmt oder gradlinig verlaufende Dehnfugen 5" keinen Oberflächenbereich umschließen, wie es in Figur 4 dargestellt ist.

Ebenso muss der Oberflächenbereich 7 nicht vollständig von gekrümmt verlaufenden Dehnfugen 5 umschlossen sein, sondern ein Teil der Dehnfugen 5 kann auch gradlinige Dehnfugen 5' bilden (Fig. 5, 6).

Vorzugsweise werden jedoch nur gekrümmt verlaufende Dehnungsfugen 5 verwendet.

In den Figuren 3, 4 und 5 sind die Oberflächenbereiche 7 gleichartig und vorzugsweise identisch ausgebildet, jedoch können auch irreguläre Flächen für die Oberflächenbereiche 7 verwendet werden (Figur 6).

Im Bereich der Dehnfugen 5 ist die Materialstärke der Wärmedämmschicht vorzugsweise etwa auf die Hälfte reduziert. Je nach zu erwartender thermischer Belastung des Bauteils kann sie auch eine geringere oder stärkere Reduzierung aufweisen. Der Oberflächenbereich 7 umschließt mehrere 100µm² bis 1000µm², besteht also nicht aus einzelnen oder mehreren Körner einer stängelartigen Struktur einer EB-PVD-Schicht, wie sie bei ZrO₂ bekannt ist.

Wenn sich beim Betrieb der Turbine 100 das metallische Grundmaterial 2 des Turbinenbauteils 1 stärker ausdehnt als das Beschichtungsmaterial der Wärmedämmbeschichtung 3, so ermöglichen die Dehnfugen 5 eine Ausdehnung der Wärmedämmschicht 3 ohne dass übermäßige Spannungen auftreten. Je nach Qualität und Quantität der auftretenden Spannungen kann die Geometrie der Dehnfugen 5 geeignet gewählt werden.

Treten hingegen die Spannungen nicht nur bevorzugt in einer Richtung auf, so kann es vorteilhaft sein, wenn sich die Dehnfugen 5 in verschiedenen Richtungen über die Oberfläche 10 der Wärmedämmbeschichtung 3 erstrecken.

Die Dehnungstoleranz der Wärmedämmbeschichtung 3 kann weiter verbessert werden, wenn diese eine Porosität aufweist.

Ein Verfahren zum Aufbringen einer Wärmedämmbeschichtung mit Dehnfugen wird nachfolgend mit Bezug auf die Figur 8 erläutert. In Figur 8 ist ein wesentlicher Verfahrensschritt beim Aufbringen der Wärmedämmbeschichtung 3 dargestellt.

Im erfindungsgemäßen Verfahren wird dort, wo sich die Dehnfugen 5 später befinden sollen, eine draht- oder seilförmige Struktur über der Oberfläche des Grundkörpers oder, wenn vorhanden, der Oberfläche 6 der Haftvermittlerschicht 4 angeordnet. Im vorliegenden Ausführungsbeispiel werden gespannte Drähte 9 mittels eines Rahmens (in Fig. 8 nicht dargestellt) mit einem Abstand d über der Oberfläche 6 der Haftvermittlerschicht 4 fixiert. Der Abstand d ist dabei größer als die spätere Dicke der Wärmedämmbeschichtung 3.

Im vorliegenden Ausführungsbeispiel wird nach dem Anbringen des Rahmens mit den gespannten Drähten 9 die keramische Wärmedämmbeschichtung 3 mittels eines EB-PVD-Verfahrens, d.h. durch Abscheiden aus der Gasphase, auf die Haftvermittlerschicht 4 aufgebracht. Dabei lagert sich in denjenigen Bereichen der Oberfläche 6 der Haftvermittlerschicht 4, die sich im Schatten der Drähte 9 befinden, weniger keramisches Material ab als in den Bereichen zwischen den Drähten 9. Auf diese Weise ist die Materialstärke im Schatten der Drähte 9 nach dem Beenden des Abscheidprozesses geringer als zwischen den Drähten 9. Die Bereiche verringerter Materialstärke bilden dann die Dehnfugen 5 in der fertigen Wärmedämmbeschichtung 3. Breite und Tiefe der Dehnfugen 5 können variiert werden, indem beispielsweise die Richtung, aus der die Abscheidung des keramischen Materials erfolgt, während des Abscheideprozesses variiert wird. Auch durch den Abstand der Drähte 9 zum zu beschichtenden Grundkörper 2 können die Dehnfugen 5 verändert werden.

Im erfindungsgemäßen Verfahren kann der spätere Verlauf der Dehnfugen 5 durch den Verlauf der Drähte 9 bestimmt werden. Wenn beispielsweise die in Figur 3 dargestellte netzartige Struktur erzeugt werden soll, so werden mittels des Rahmens nicht einzelne Drähte, sondern ein Drahtnetz mit der entsprechenden Struktur über der zu beschichtende Oberfläche angebracht. Die Dehnfugen 5 können auch nach der Beschichtung erzeugt werden (Lasergravur, Elektronenbestrahlung).

Als Haftvermittlerschicht 4 kann beim erfindungsgemäßen Bauteil 1, insbesondere eine MCrA1X-Schicht, also eine Schicht aus einer metallischen Legierung, die Chrom (Cr) und Aluminium (A1) umfasst und in der X für Yttrium oder ein Element der seltenen Erden und M für Eisen (Fe), Kobalt (Co) oder Nickel (Ni) stehen zur Anwendung kommen.

Als keramische Wärmedämmbeschichtung eignen sich insbesondere auf Zirkon (Zr) basierende Beschichtungen, beispielsweise eine Zirkonoxidbeschichtung.

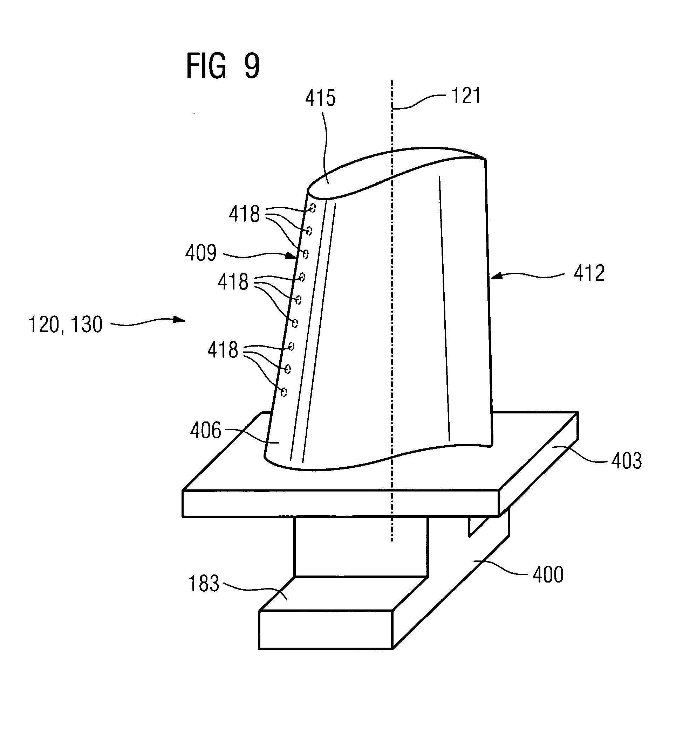

Figur 9 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation aufweisen, z. B. (MCrAIX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid und weist die erfindungsgemäßen Dehnfuge 5, 5', 5" auf.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

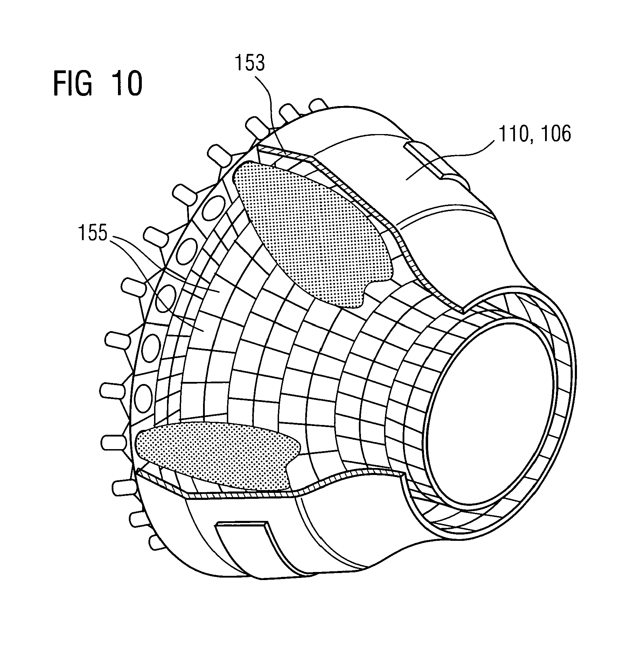

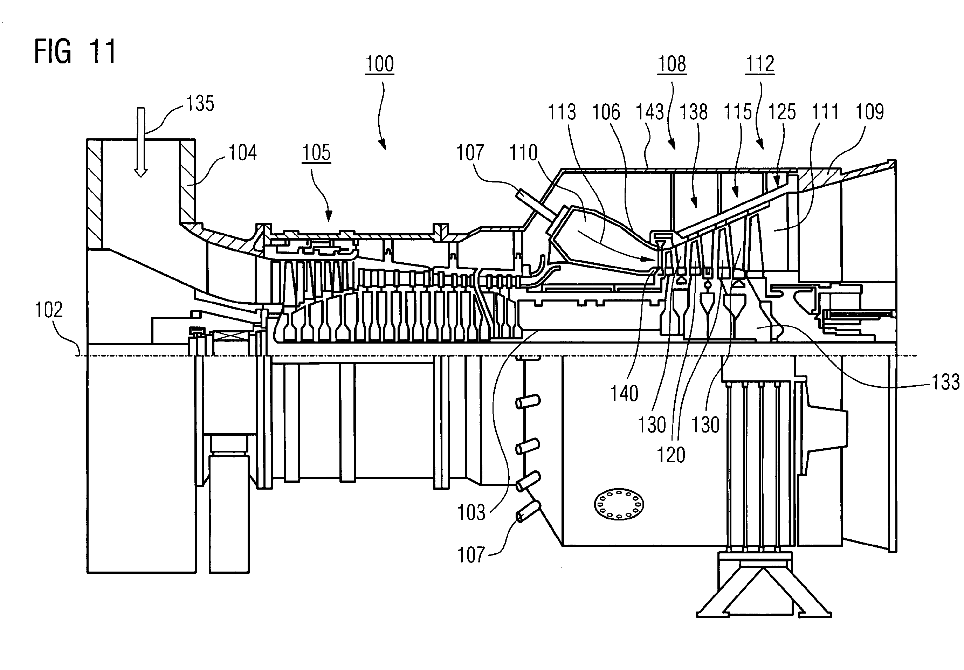

Die Figur 10 zeigt eine Brennkammer 110 einer Gasturbine 100 (Fig. 11).
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAIX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAIX kann noch eine beispielsweise keramische Wärmedämmschicht mit erfindungsgemäß ausbildeten Dehnfugen 5, 5', 5" vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Filmkühllöcher (nicht dargestellt) auf.

Die Figur 11 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Bauteil (1) aus einem Substrat (2)
mit einer über dem Substrat (2) aufgebrachten Beschichtung (3),
die eine Oberfläche (10) aufweist,
in der gekrümmt verlaufende Dehnfugen (5) vorhanden sind,
**dadurch gekennzeichnet, dass**
die gekrümmt verlaufenden Dehnfugen (5) zumindest einen, insbesondere mehrere Oberflächenbereiche (7) der Oberfläche (10) zumindest teilweise, insbesondere vollständig umschließen.

2. Bauteil (1) nach Anspruch 1,
**dadurch gekennzeichnet, dass**
die Dehnfugen (5) eine netzartige Struktur (8) bilden.

3. Bauteil (1) nach Anspruch 2,
**dadurch gekennzeichnet, dass**
die netzartige Struktur (8) durch Kreuzung von Dehnfugen (5) gebildet ist.

4. Bauteil (1) nach Anspruch 1,
**dadurch gekennzeichnet, dass**
die Dehnfugen (5) runde (6) und ovale (9) Oberflächenbereiche (7) umschließen.

5. Bauteil (1) nach Anspruch 1,
**dadurch gekennzeichnet, dass**
die Dehnfugen (5) nur runde (6) Oberflächenbereiche (7) umschließen.

6. Bauteil (1) nach Anspruch 1,
**dadurch gekennzeichnet, dass**
die Dehnfugen (5) nur ovale (9) Oberflächenbereiche (7) umschließen.

7. Bauteil (1) nach Anspruch 4, 5 oder 6,
**dadurch gekennzeichnet, dass**
die Kreise (6) und/oder die Ovale (9) jeweils gleiche Radien aufweisen.

8. Bauteil (1) nach Anspruch 4, 5, 6 oder 7,
**dadurch gekennzeichnet, dass**
die Kreise (6) und/oder die Ovale (9) gleichmäßig auf der Oberfläche (10) verteilt sind.

9. Bauteil (1) nach Anspruch 1,
**dadurch gekennzeichnet, dass**
die Beschichtung (3) eine Porosität größer 5vol% bis 20vol% aufweist.

10. Bauteil (1) nach Anspruch 1 oder 9,
**dadurch gekennzeichnet, dass**
die Beschichtung (3) eine keramische Beschichtung ist und insbesondere zwischen dem Substrat (2) und der keramischen Beschichtung (3) eine Haftvermittlerschicht (4) vorhanden ist,
dass insbesondere das Substrat (4) metallisch ist.

11. Bauteil (1) nach einem der vorangehenden Ansprüche, **gekennzeichnet durch** seine Ausgestaltung als Bauteil (1, 120, 130, 155),
insbesondere als Nabenbauteil einer Turbine (100).

12. Verfahren zum Herstellen einer Beschichtung (3) auf einer Bauteiloberfläche (11) eines Bauteils (1, 120, 130, 138, 155) nach einem oder mehreren der Ansprüche 1 bis 11,
**dadurch gekennzeichnet, dass**
vor dem Aufbringen der Beschichtung (3) eine Struktur aus draht- oder seilförmigen Elementen (12),
insbesondere eine netzartige Struktur, mit Abstand (d) über der Bauteiloberfläche (11) angeordnet und nach dem Aufbringen der Beschichtung (3) wieder entfernt wird.

13. Verfahren nach Anspruch 12,
**dadurch gekennzeichnet, dass**
das Aufbringen der Beschichtung (3) mittels eines thermischen Spritzverfahrens oder eines Abscheideprozesses aus der Gasphase erfolgt.
